# EUROPEAN PATENT APPLICATION

(11) **EP 3 789 468 A1**
(43) Date of publication of application: **10.03.2021**
(21) Application number: 19195216.7
(22) Date of filing: 03.09.2019
(51) Int. Cl.: C09K 11/77

(54) **ANNEALING METHOD**

(71) Applicant: Seaborough IP I B.V., 1098 XG Amsterdam (NL)
(72) Inventor: Berends, Anne Claire, 3551 TJ Utrecht (NL); van de Haar, Marie Anne, 1381 HL Weesp (NL)
(74) Representative: Hoyng Rokh Monegier B.V.

(57) **Abstract**

The invention provides a method for preparing a luminescent composition, said method comprising:
(a) providing a first luminescent material or a precursor thereof, said first luminescent material being capable of emitting light in a first wavelength range;
(b) providing a second luminescent material or a precursor thereof, said second luminescent material being capable of absorbing light in a second wavelength range and having an emission spectrum which overlaps at least partly with one or more of excitation bands of said first luminescent material; and
(c) mixing said first luminescent material or said precursor thereof and said second luminescent material or said precursor thereof,
wherein said method further comprises:
(I) preparing a mixture comprising (i) said first luminescent material or said precursor thereof and/or said second luminescent material or said precursor thereof and (ii) a salt; and
(II) heating said mixture at a temperature of 300°C or more.

## Description

### FIELD OF THE INVENTION

The invention relates to a method for preparing a luminescent composition. The invention further relates to a method for preparing a luminescent material. The invention further relates to luminescent compositions and materials obtainable by the methods according to the invention. The invention further relates to devices comprising the luminescent composition and/or luminescent material of the invention.

### BACKGROUND OF THE INVENTION

Luminescent down-conversion materials play an important role in solid-state lighting devices for illumination and display applications, among others.

WO2018/167266 discloses compositions comprising a light emitting material and a sensitizer material, wherein the light emitting material and the sensitizer material are selected such that the sensitizer material has an emission spectrum which overlaps at least partly with one or more excitation bands of the light emitting material and wherein the light emitting material and sensitizer material are so arranged to each other to allow non-radiative energy transfer from the sensitizer material to the light emitting material. This application also describes methods for the preparation thereof.

Non-radiative energy transfer (sometimes also referred to as Fluorescent Resonance Energy Tranfer, FRET) from the sensitizer material to the light emitting material involves the non-radiative transfer of energy from an excited sensitizer ion in the sensitizer material to an acceptor (or emitter) ion in the light emitting material. It is evidenced by increased selective excitation of the sensitizer ion in the sensitizer material, resulting in increased emission from an emitter ion in the light emitting material.

The present application discloses further improved methods for obtaining luminescent materials and compositions.

### SUMMARY OF THE INVENTION

According to a first aspect of the invention, there is provided a method for preparing a luminescent composition, said method comprising:
(a) providing a first luminescent material or a precursor thereof, said first luminescent material being capable of emitting light in a first wavelength range;
(b) providing a second luminescent material or a precursor thereof, said second luminescent material being capable of absorbing light in a second wavelength range and having an emission spectrum which overlaps at least partly with one or more of excitation bands of said first luminescent material; and
(c) mixing said first luminescent material or said precursor thereof and said second luminescent material or said precursor thereof,
   wherein said method further comprises:
   (I) preparing a mixture comprising (i) said first luminescent material or said precursor thereof and/or said second luminescent material or said precursor thereof and (ii) a salt; and
   (II) heating said mixture at a temperature of 300°C or more.

According to a second aspect of the invention, there is provided a method for treating or obtaining a luminescent material, said method comprising:
(I) preparing a mixture comprising a luminescent material and/or a precursor thereof and a salt, and
(II) heating the mixture at a temperature of 300°C or more,
wherein the ratio of salt to luminescent material and/or precursor thereof in the mixture is more than 1:1 (w/w), preferably more than 2:1 (w/w), more preferably more than 5:1 (w/w), most preferably more than 10:1 (w/w).

The methods according to the invention enable obtaining compositions or materials having excellent luminescent properties. More specifically, the method according to the first aspect of the invention enables arranging the luminescent materials close in space to effectively harness inter-particle FRET. Furthermore, the methods enable obtaining compositions or materials having few crystal defects and which are highly crystalline at small sizes (about 50 nm or less, even about 20 nm or less). Additionally, it is found that increasing the salt:luminescent-material (w/w) ratio has the advantage of reducing sintering (aggregation, growth and/or clustering). This is particularly advantageous when the luminescent material is in the form of nanoparticles.

### BRIEF DESCRIPTION OF THE FIGURES

FIGURE 1 shows the overlap of the emission spectrum of Lu₃Al₅O₁₂:Ce (0.65%) (LuAG) (upper trace) as second luminescent material and of excitation bands of LaPO₄:Tb (lower trace) as first luminescent material.
FIGURE 2 shows the overlap of the emission spectrum of Lu₃Al₅O₁₂:Ce (0.65%) (LuAG) (upper trace) as second luminescent material and of excitation bands of Li₃Ba₂(La₀,₆Eu₀,₄)₃(MoO₄)₈ (lower trace) as first luminescent material.
FIGURE 3 shows photoluminescence spectra of YAG:Ce particles before and after salt treatment, heating and salt removing. Mixing was performed in a 1:15 YAG:salt weight ratio. Samples were prepared as described in Example 3.

### DETAILED DESCRIPTION OF THE INVENTION

Unless indicated otherwise, the detailed description below applies to the method according to the first aspect of the invention and to the second aspect of the invention.

### Luminescent material or precursor thereof

The luminescent material or precursor thereof may be any suitable inorganic luminescent material or precursor thereof. The skilled person will understand that, as used herein, precursor refers to a material, for instance a non-crystalline material, which under heating according to the invention converts to a luminescent material.

The luminescent material or precursor thereof preferably comprises an optically active ion in a suitable host lattice. The host lattice may for instance be selected from the group consisting of oxides, fluorides, nitrides, borates, garnets, molybdates, phosphates, vanadates, chlorides, sulfides, selenides, silicates, aluminates, oxyfluorides, oxychlorides, oxynitrides, oxysulfides, oxyselenides, fluorochlorides, fluorosilicates and fluorobromides or combinations of these or another inorganic host material in which optically active ions may be incorporated. The luminescent material or precursor thereof may, for instance, be any of the materials referred to as first luminescent material or second luminescent material

Preferably, the host lattice of the luminescent material or precursor thereof is a garnet, more preferably selected from the group consisting of Y₃Al₅O₁₂ ("YAG") or Lu₃Al₅O₁₂ ("LuAG") or a combination thereof. Preferably, the luminescent material or precursor thereof is doped with one or more ions selected from the group consisting of Ce³⁺, Eu³⁺ and Tb³⁺. More preferably, the luminescent material or precursor thereof is doped with a dopant which includes at least Ce³⁺, optionally in combination with Tb³⁺. Most preferably, the host lattice is selected from the group consisting of Y₃Al₅O₁₂ ("YAG") or Lu₃Al₅O₁₂ ("LuAG") or a combination thereof and the dopant includes Ce³⁺, optionally in combination with Tb³⁺.

Preferably, the luminescent material or the precursor thereof is in particulate form, more preferably in the form of nanoparticles. Suitable nanoparticles include particles of which at least one dimension is at a nanometer scale, preferably ≤ 100 nm. The skilled person will understand that the nanoparticles may for instance be in the form of nanoplatelets, nanorods or nanodots. Nanoparticles are especially suited for the method of the invention.

Preferably, the D₅₀ value of the smallest dimension of the nanoparticles is ≥ 1nm and ≤ 100 nm, more preferably ≥ 1nm and ≤50 nm, most preferably ≥ 2nm and ≤10 nm, as measured using transmission electron microscopy (TEM). D₅₀ is defined as the median value of the length of the smallest dimension of the nanoparticles, measured from an ensemble of at least 50 representative particles.

The nanoparticles may comprise organic ligands. As the skilled person knows, these are generally referred to as capping molecules (or capping agents) and used to control growth and/or clustering of particles.

The ligands may be any organic ligands suitable for this purpose. Examples of ligands include fatty acids (including salts and esters thereof), amines, polyols, for instance oleic acid, oleyl amine, oleate, tributylamine and (poly) ethylene glycol.

Preferably, the ligands of the nanoparticles are tuned to enhance mixing with the salt. Generally, heating to high temperatures (about 300°C or higher), is found to result in removal of the organic ligands of the particles. In a preferred embodiment, a temperature of about 500 °C or higher is used. A temperature of 500 °C or higher allows to obtain more efficacy.

### First luminescent material and precursor thereof and second luminescent material and precursor thereof

The method according to the first aspect of the invention comprises providing a first luminescent material or a precursor thereof and a second luminescent material or a precursor thereof.

The first luminescent material is capable of emitting light in a first wavelength range. The skilled person will understand that the first luminescent material functions as an emitting material in the composition obtained or obtainable by the method according to the invention. The first wavelength range may be any wavelength range of interest. Preferred wavelength ranges will be described hereinafter.

The second luminescent material is capable of absorbing light in a second wavelength range. The skilled person will understand that the second luminescent material functions as a sensitizer material according to the invention. The second wavelength range may be any wavelength range of interest. Preferred wavelength ranges will be described hereinafter.

The second luminescent material has an emission spectrum which overlaps at least partly with one or more excitation bands of said first luminescent material. In particular, the second luminescent material has, when excited by light in the second wavelength range, an emission spectrum which overlaps at least partly with one or more excitation bands of said first luminescent material. The skilled person is well able to determine the overlap of the spectra based on spectra known in the art or by determine the spectra by routine experimentation.

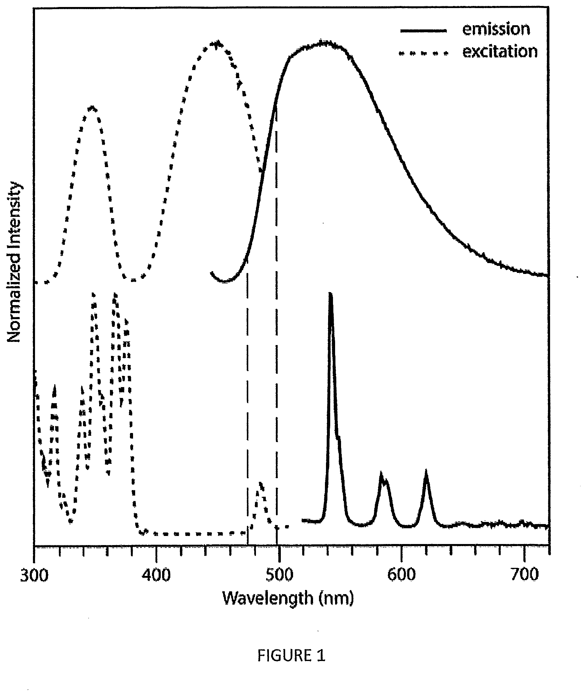

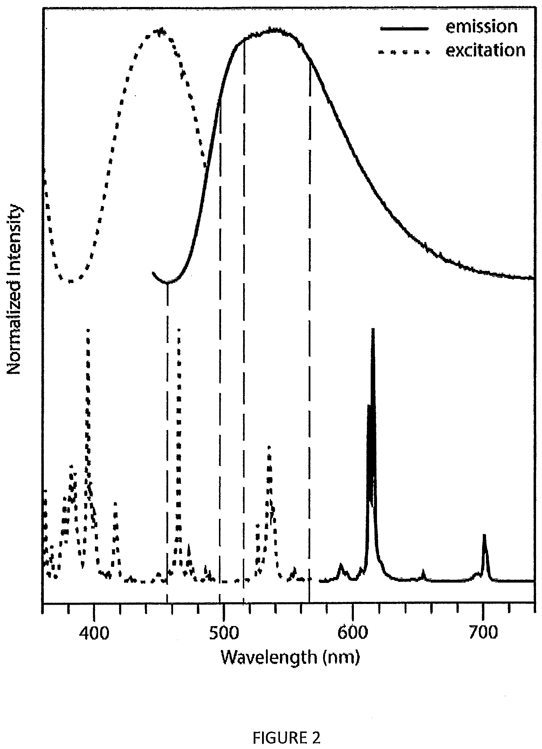

For instance, Figure 1 shows the overlap of the emission spectrum of Lu₃Al₅O₁₂:Ce (0.65%) (LuAG) (upper trace) as second luminescent material and of excitation bands of LaPO₄:Tb (lower trace) as first luminescent material. The area of overlap is indicated between dashed lines. Figure 2 shows the overlap of the emission spectrum of Lu₃Al₅O₁₂:Ce (0.65%) (LuAG) (upper trace) as second luminescent material and of excitation bands of Li₃Ba₂(La₀,₆Eu₀,₄)₃(MoO₄)₈ (lower trace) as first luminescent material. The overlapping area is indicated between dashed lines as well.

### The first luminescent material

Any suitable inorganic luminescent material may be used as first luminescent material. Luminescent materials known in the art may for instance be used. The first luminescent material is capable of emitting light in a first wavelength range. The first wavelength range may be any wavelength range of interest.

Preferably, the first luminescent material comprises a red emitting material. As used herein the term red emitting material refers to a material which, upon suitable excitation, has one or more emission bands between 600 nm and 700 nm. Providing a red emitting material can be desirable for color rendering purposes. According to alternative aspects of the invention, the first luminescent material is a material having, upon suitable excitation, one or more emission bands between 700 and 1400 nm (IR-A), between 580 and 600 nm (amber and/or orange), between 560 and 580 nm (yellow), between 510-560 nm (green), between 480 and 510 nm (cyan), between 440 and 480 nm (blue), between 400-440 nm (violet), between 315-400 nm (UV-A), and/or between 280-315 nm (UV-B).

In a preferred embodiment, the first luminescent material comprises a rare-earth doped phosphor material. The phosphor materials may be divalent or trivalent rare-earth doped phosphors. Examples of suitable rare-earth doped phosphor materials include, but are not limited to: LaPO₄:Tb³⁺, CaAlSiN₃:Eu²⁺, Y₂O₃:Eu³⁺, Y(V,P)O₄:Eu³⁺, Y₃Al₅O₁₂:Ce³⁺.

Phosphor materials may be procured today on the open market, or may be synthesized, for example as described in [Riwotzki, K.; Meyssamy, H.; Kornowski, A.; Haase, M. J. Phys. Chem. B. 2000, 104, 2824-2828].

As is known to the skilled person, rare-earth doped phosphor materials comprise a host lattice doped with optically active ions.

The first luminescent material may have any suitable host lattice. The host lattice may for instance be selected from the group consisting of oxides, fluorides, nitrides, borates, garnets, molybdates, phosphates, vanadates, chlorides, sulfides, selenides, silicates, aluminates, oxyfluorides, oxychlorides, oxynitrides, oxysulfides, oxyselenides, fluorochlorides, fluorosilicates and fluorobromides or combinations of these or another inorganic host material in which the optically active ions can be incorporated.

Preferably, the host lattice of the first luminescent material is an oxide, phosphate, vanadate or a combination thereof, more preferably selected from the group consisting of Y₃Al₅O₁₂ ("YAG"), Lu3Al₅O₁₂ ("LuAG"), Y₂O₃, YVPO₄, YVO₄ or LaPO₄ or a combination thereof. Preferably, said preferred host lattice of the first luminescent material is doped with one or more ions selected from the group consisting of Eu³⁺, Ce³⁺, Tb³⁺ and Mn⁴⁺. These ions provide good emission characteristics, such as emission bands that are strong and/or in the red part of the visible spectrum.

In case of Eu³⁺ doping, the first luminescent material may for example have a host lattice doped at a doping level of 2-100% Eu³⁺, more preferably 5-50% Eu³⁺. In case Tb³⁺ doping, the first luminescent material may for example have a host lattice doped at a doping level of 5-100% Tb³⁺, more preferably 20-50% Tb³⁺. In case of Mn⁴⁺ doping, the first luminescent material may for example have a host lattice doped at a doping level of 0.1-20%, most preferably between 1-5%. In case of Ce³⁺ doping, the first luminescent material may for example have a host lattice doped at a doping level of 0.05-5%, more preferably 0.1-4%.

In an exemplary embodiment, the first luminescent material is selected from the group consisting of (Ca,Sr)Ga₂O₆:Eu³⁺ (and/or Tb³⁺), (Ca,Sr,Ba)La₂Bi₂(SiO₄)₃O:Eu³⁺ (and/or Tb³⁺), (Ca,Sr,Ba)SnO₃:Eu³⁺ (and/or Tb³⁺), (Ca,Y,Gd)MoO₄:Eu³⁺ (and/or Tb³⁺), (Y,Gd)BO₃ (pseudo-vaterite) :Eu³⁺ (and/or Tb³⁺), (Y,Tb)SiO₅:Eu³⁺ (and/or Tb³⁺), A-La₂O₃:Eu³⁺ (and/or Tb³⁺), Ba₂(SiO₄):O²⁻ :Eu³⁺ (and/or Tb³⁺), Ba₂MgSi₂O₇:Eu³⁺ (and/or Tb³⁺), Ba₂Y(BO₃)₂Cl:Eu³⁺ (and/or Tb³⁺), Ba₃(PO₄)₂:Eu³⁺ (and/or Tb³⁺), Ba₃Ca₃(PO₄)₄:Eu³⁺ (and/or Tb³⁺), Ba₃Gd(BO₃)₃:Eu³⁺ (and/or Tb³⁺), Ba₃Gd₂(BO₃)₄:Eu³⁺ (and/or Tb³⁺), Ba₃La₂(BO₃)₄:Eu³⁺ (and/or Tb³⁺), Ba₃V₂O₈:Eu³⁺ (and/or Tb³⁺), Ba₃Y₂(BO₃)₄:Eu³⁺ (and/or Tb³⁺), BaB₈O₁₃ :Eu³⁺ (and/or Tb³⁺), BaBPO₅ :Eu³⁺ (and/or Tb³⁺), BaFCl:Eu³⁺ (and/or Tb³⁺), BaGd₂O₄:Eu³⁺ (and/or Tb³⁺), BaGd₄Si₅O₁₇:Sm:Eu³⁺ (and/or Tb³⁺), BaGdB₉O₁₆:Eu³⁺ (and/or Tb³⁺), BaLaB₉O₁₆:Eu³⁺ (and/or Tb³⁺), BaSO₄:Eu³⁺ (and/or Tb³⁺), BaY₂F₈:Yb:Eu³⁺ (and/or Tb³⁺), BaY₂Si₃O₁₀:Eu³⁺ (and/or Tb³⁺), BaYB₉O₁₆:Eu³⁺ (and/or Tb³⁺), BaZr(BO₃)₂:Eu³⁺ (and/or Tb³⁺), BaZrO₃:Eu³⁺ (and/or Tb³⁺), BaZrO₃:Eu³⁺ (and/or Tb³⁺), b-BaB₂O₄:Eu³⁺ (and/or Tb³⁺), B-Gd₂O₃:Eu³⁺ (and/or Tb³⁺), Ca₂Al(AlSiO₇) :Eu³⁺ (and/or Tb³⁺), Ca₂Gd₂(GeO₄)₂O:Eu³⁺ (and/or Tb³⁺), Ca₂Gd₈(SiO₄)₆O₂:Eu³⁺ (and/or Tb³⁺), Ca₂Gd₈Si₆O₂₆:Eu³⁺ (and/or Tb³⁺), Ca₂La₈(SiO₄)₆O₂:Eu³⁺ (and/or Tb³⁺), Ca₃(BO₃)₂:Eu³⁺ (and/or Tb³⁺), Ca₃Al₂O₆:Eu3⁺ (and/or Tb³⁺), Ca₃Gd₂(BO₃)₄:Eu³⁺ (and/or Tb³⁺), Ca₃La₂(BO₃)₄:Eu³⁺ (and/or Tb³⁺), Ca₃Y₂(BO₃)₄:Eu³⁺ (and/or Tb³⁺), Ca₄GdO(BO₃)₃:Eu³⁺ (and/or Tb³⁺), Ca₅(PO₁₁)₃F:Eu³⁺ (and/or Tb³⁺), Ca₅(PO₄)₃Br:Eu³⁺ (and/or Tb³⁺), Ca₅(PO₄)₃F:(4f-site) :Eu³⁺ (and/or Tb³⁺), Ca₅(PO₄)₃F:(6h-site) :Eu³⁺ (and/or Tb³⁺), Ca₅(PO₄)₃OH:Eu³⁺ (and/or Tb³⁺), CaBPO₅:Eu³⁺ (and/or Tb³⁺), CaF₂:Eu³⁺ (and/or Tb³⁺), CaLaB₇O₁₃:Eu³⁺ (and/or Tb³⁺), calcite-CaCO₃:Eu³⁺ (and/or Tb³⁺), CaO:Eu³⁺ (and/or Tb³⁺), CaSO₄:Eu³⁺ (and/or Tb³⁺), CaYO(BO₃):Eu³⁺ (and/or Tb³⁺), C-Gd₂O₃:Eu³⁺ (and/or Tb³⁺), C-Lu₂O₃:(C2) :Eu³⁺ (and/or Tb³⁺), C-Lu₂O₃:(C3i):Eu³⁻¹ (and/or Tb³⁺), Cs₂NaYF₆:Tm:Eu³⁺ (and/or Tb³⁺), C-Sc₂O₃:Yb:Eu³⁻¹ (and/or Tb³⁺), C-Y₂O₃:Eu³⁺ (and/or Tb³⁺), Eu³⁺ (and/or Tb³⁺), [(ttfa)₃(phen)]:Eu³⁺ (and/or Tb³⁺), Gd₁₇.₃₃(BO₃)₄(B₂O₅)₂O₁₆:Eu³⁺ (and/or Tb³⁺), Gd₂BaZnO₅:Eu³⁺ (and/or Tb³⁺), Gd₂O₂(SO₄) :Eu³⁺ (and/or Tb³⁺), Gd₂P₄O₁₃:Eu³⁺ (and/or Tb³⁺), Gd₃O₄Br:Eu³⁺ (and/or Tb³⁺), Gd₃PO₇:Eu³⁻¹ (and/or Tb³⁺), Gd₃Te₂Li₃O₁₂:Eu³⁺ (and/or Tb³⁺), Gd₈P₂O₁₇:Eu³⁺ (and/or Tb³⁺), GdA₁₃ (BO₃)₄:Eu³⁺ (and/or Tb³⁺), GdAlO₃:Eu³⁺ (and/or Tb³⁺), GdAlO₃:Eu³⁺ (and/or Tb³⁺), GdB₃O₆:Eu³⁺ (and/or Tb³⁺), GdBO₃:Eu³⁺ (and/or Tb³⁺), GdGaO₃:Eu³⁺ (and/or Tb³⁺), GdOBr:Eu³⁺ (and/or Tb³⁺), GdOCl:Eu³⁺ (and/or Tb³⁺), GdP₃O₉:Eu³⁺ (and/or Tb³⁺), GdPO₄:Eu³⁺ (and/or Tb³⁺), I-CaB₂O₄:Eu³⁺ (and/or Tb³⁺), InBO₃:Eu³⁺ (and/or Tb³⁺), I-SrB₂O₄:Eu³⁺ (and/or Tb³⁺), KCaGd(PO₄)₂:Eu³⁺ (and/or Tb³⁺), La₂₆O₂₇(BO₃)₈:Eu³⁺ (and/or Tb³⁺), La₂BaZnO₅:Eu³⁺ (and/or Tb³⁺), La₂Hf₂O₇:E³⁺ (and/or Tb³⁺), La₂O₂(SO₄):Eu³⁺ (and/or Tb³⁺), La₂O₂S:Eu³⁺ (and/or Tb³⁺), La₂W₃O₁₂:Eu³⁺ (and/or Tb³⁺), La₂Zr₃(MoO₄)₉:Eu³⁺ (and/or Tb³⁺), La₃TaO₄Cl₆:Eu³⁺ (and/or Tb³⁺), La₃WO₆Cl₃:Eu³⁺ (and/or Tb³⁺), LaAlO₃:Eu³⁺ (and/or Tb³⁺), LaB₃O₆:Eu³⁺ (and/or Tb³⁺), LaBO₃:Eu³⁺ (and/or Tb³⁺), LaF₃:Eu³⁺ (and/or Tb³⁺), LaGaO₃:Eu³⁺ (and/or Tb³⁺), LaMgB₅O₁₀:Eu³⁺ (and/or Tb³⁺), LaOBr:Eu³⁺ (and/or Tb³⁺), LaOCl:Eu³⁺ (and/or Tb³⁺), LaOF:Eu³⁺ (and/or Tb³⁺), LaOI:Eu³⁺ (and/or Tb³⁺), LaP₃O₉:Eu³⁺ (and/or Tb³⁺), LaPO₄:Eu³⁺ (and/or Tb³⁺), LaYO₃:Eu³⁺ (and/or Tb³⁺), Li₂Lu₅O₄(BO₃)₃:Eu³⁺ (and/or Tb³⁺), Li₃Ba₂La₃(MoO₄)₈:Eu³⁺ (and/or Tb³⁺), Li₃La₂(BO₃)₃:Eu³⁺ (and/or Tb³⁺), Li₆Gd(BO₃)₃:Eu³⁺ (and/or Tb³⁺), Li₆Y(BO₃)₃:Eu³⁺ (and/or Tb³⁺), LiCaAlF₆:Eu³⁺ (and/or Tb³⁺), LiEu³⁺ (and/or Tb³⁺), Mo₂O_{8:}Eu³⁺ (and/or Tb³⁺), LiGd₆O₅(BO₃)₃:Eu³⁺ (and/or Tb³⁺), LiGdF4:Eu³⁺ (and/or Tb³⁺), LiGdGeO₄:Eu³⁺ (and/or Tb³⁺), LiGdO₂:Eu³⁺ (and/or Tb³⁺), LiGdSiO₄:Eu³⁺ (and/or Tb³⁺), LiLa₂O₂BO₃:Eu³⁺ (and/or Tb³⁺), LiLaGeO₄:Eu³⁺ (and/or Tb³⁺), LiLaO₂:Eu³⁺ (and/or Tb³⁺), LiLaP₄O₁₂:Eu³⁺ (and/or Tb³⁺), LiLaSiO₄:Eu³⁺ (and/or Tb³⁺), LiLuGeO₄:Eu³⁺ (and/or Tb³⁺), LiLuO₂:Eu³⁺ (and/or Tb³⁺), LiLuSiO₄:Eu³⁺ (and/or Tb³⁺), LiScO₂:Eu³⁺ (and/or Tb³⁺), LiSr₂YO₄:Eu³⁺ (and/or Tb³⁺), LiSrAlF₆:Eu³⁺ (and/or Tb³⁺), LiY₆O₅(BO₃)₃:Eu³⁺ (and/or Tb³⁺), LiYF₄:Eu³⁺ (and/or Tb³⁺), LiYGeO₄:Eu³⁺ (and/or Tb³⁺), LiYO₂:Eu³⁺ (and/or Tb³⁺), LiYSiO₄:Eu³⁺ (and/or Tb³⁺), Lu₂O₂(SO₄):Eu³⁺ (and/or Tb³⁺), Lu₂Si₂O₇:Eu³⁺ (and/or Tb³⁺), Lu₃Al₅O₁₂:Eu³⁺ (and/or Tb³⁺), Lu₃Al₅O₁₂:Yb:Eu³⁺ (and/or Tb³⁺), LuBO₃:Eu³⁺ (and/or Tb³⁺), LuBO₃ (calcite):Eu³⁺ (and/or Tb³⁺), LuOCl:Eu³⁺ (and/or Tb³⁺), LuPO₄:Eu³⁺ (and/or Tb³⁺), Mg₂Gd₈(SiO₄)₆O₂:Eu³⁺ (and/or Tb³⁺), Mg₂La₈(SiO₄)₆O₂:Eu³⁺ (and/or Tb³⁺), MgO:Eu³⁺ (and/or Tb³⁺), MgSiO₃:Eu³⁺ (and/or Tb³⁺), Na₃YSi₃O₉:Eu³⁺ (and/or Tb³⁺), Na₆Gd(BO₃)₃:Eu³⁺ (and/or Tb³⁺), NaGdGeO₄:Eu³⁺ (and/or Tb³⁺), NaGdO₂:Eu³⁺ (and/or Tb³⁺), NaGdSiO₄:Eu³⁺ (and/or Tb³⁺), NaLaGeO₄:Eu³⁺ (and/or Tb³⁺), NaLaO₂:Eu³⁺ (and/or Tb³⁺), NaLaSiO₄:Eu³⁺ (and/or Tb³⁺), NaLuGeO₄:Eu³⁺ (and/or Tb³⁺), NaLuSiO₄:Eu³⁺ (and/or Tb³⁺), NaScO₂:Eu³⁺ (and/or Tb³⁺), NaSrLa(VO₄)₂:Eu³⁺ (and/or Tb³⁺), NaYGeO₄:Eu³⁺ (and/or Tb³⁺), NaYSiO₄:Eu³⁺ (and/or Tb³⁺), ScBO₃:Eu³⁺ (and/or Tb³⁺), ScOCl:Eu³⁺ (and/or Tb³⁺), ScPO₄:Eu³⁺ (and/or Tb³⁺), Sr₂B₂O₅:Eu³⁺ (and/or Tb³⁺), Sr₂Gd₈(SiO₄)₆O₂:Eu3⁺ (and/or Tb³⁺), Sr₂La₂Zn₂O₇:Eu³⁺ (and/or Tb³⁺), Sr₂La₂Zn₂O₇:Eu³⁺ (and/or Tb³⁺), Sr₂LaAlO₅:Eu³⁺ (and/or Tb³⁺), Sr₃(BO₃)₂:Eu³⁺ (and/or Tb³⁺), Sr₃(PO₄)₂:Eu³⁺ (and/or Tb³⁺), Sr₃(PO₄)₂:Sm:Eu³⁺ (and/or Tb³⁺), Sr₃Gd₂(BO₃)₄:Eu³⁺ (and/or Tb³⁺), Sr₃La₂(BO₃)₄:Eu³⁺ (and/or Tb³⁺), Sr₃La₆(SiO₄)₆:Eu³⁺ (and/or Tb³⁺), Sr₃Y₂(BO₃)₄:Eu³⁺ (and/or Tb³⁺), Srₛ(PO₄)₃F:Eu³⁺ (and/or Tb³⁺), Sr₉Ln(VO₄)₇:Eu³⁺ (and/or Tb³⁺), SrAl₂B₂O₇:Eu³⁺ (and/or Tb³⁺), SrB₄O₇:Eu³⁺ (and/or Tb³⁺), SrB₆O₁₀:Eu³⁺ (and/or Tb³⁺), SrCO₃:Eu³⁺ (and/or Tb³⁺), SrGdAlO₄:Eu³⁺ (and/or Tb³⁺), SrHfO₃:Eu³⁺ (and/or Tb³⁺), SrLa₂BeO₅:Eu³⁺ (and/or Tb³⁺), SrLa₂BeO₅:Eu³⁺ (and/or Tb³⁺), SrLaAlO₄:Eu³⁺ (and/or Tb³⁺), SrLaGa₃O₇:Eu³⁺ (and/or Tb³⁺), SrLaO(BO₃):Eu³⁺ (and/or Tb³⁺), SrO:Eu³⁺ (and/or Tb³⁺), SrY₂O₄:(Sr-site):Eu³⁺ (and/or Tb³⁺), SrY₂O₄:Eu³⁺ (and/or Tb³⁺), SrY₂O₄:Eu³⁺ (and/or Tb³⁺), Tb₂Mo₃O₁₂:Eu³⁺ (and/or Tb³⁺), Tb₂W₃O₁₂:Eu³⁺ (and/or Tb³⁺), TbBO₃:Eu³⁺ (and/or Tb³⁺), ThO₂:Eu³⁺ (and/or Tb³⁺), Gd₂SiO₅:Eu³⁺ (and/or Tb³⁺), Y₂SiO₅:Eu³⁺ (and/or Tb³⁺), Y_{17.33}(BO₃)₄(B₂O₅)₂O₁₆:Eu3⁺ (and/or Tb³⁺), Y₂Ge₂O₇:Eu³⁺ (and/or Tb³⁺), Y₂GeO₅:Eu³⁺ (and/or Tb³⁺), Y₂O₂(SO₄):Eu³⁺ (and/or Tb³⁺), Y₂O₂S:Eu³⁺ (and/or Tb³⁺), Y₂O₂S:Eu³⁺ (and/or Tb³⁺), Y₂O₃:Eu³⁺ (and/or Tb³⁺), Y₂P₄O₁₃:Eu³⁺ (and/or Tb³⁺), Y₂Si₂O₇:Eu³⁺ (and/or Tb³⁺), Y₂SiO₅:Eu³⁺ (and/or Tb³⁺), Y₃Al₅O₁₂:Eu³⁺ (and/or Tb³⁺), Y₃O₄Br:Eu³⁺ (and/or Tb³⁺), Y₃O₄Cl:Eu³⁺ (and/or Tb³⁺), Y₃PO₇:Eu³⁺ (and/or Tb³⁺), Y₄GeO₈:Eu³⁺ (and/or Tb³⁺), Y₈P₂O₁₇:Eu³⁺ (and/or Tb³⁺), YAl₃(BO₃)₄:Eu³⁺ (and/or Tb³⁺), YAlO₃:Eu³⁺ (and/or Tb³⁺), YBO₃:Eu³⁺ (and/or Tb³⁺), YbOBr:Yb:Eu³⁺ (and/or Tb³⁺), YF₃:Eu³⁺ (and/or Tb³⁺), YOBr:Eu³⁺ (and/or Tb³⁺), YOCl:Eu³⁺ (and/or Tb³⁺), YOCl:Eu³⁺ (and/or Tb³⁺), YOF:Eu³⁺ (and/or Tb³⁺), YOF:Eu³⁺ (and/or Tb³⁺), YP₃O₉:Eu³⁺ (and/or Tb³⁺), YPO₄:Eu³⁺ (and/or Tb³⁺), YTaO₄:Eu³⁺ (and/or Tb³⁺), YVO₄:Eu³⁺ (and/or Tb³⁺), ZrP₂O₇:Eu³⁺ (and/or Tb³⁺), Y₃AlₛO₁₂:Ce³⁺, Lu₃Al₅O₁₂:Ce³⁺, K₂SiF₆:Mn⁴⁺, or mixtures thereof.

The skilled person will understand that the notation :Eu³⁺ (or or Ce³⁺ or Mn⁴⁺) indicates that the host lattice is doped with Eu³⁺ or with Tb³⁺, or with Ce³⁺, or with Mn⁴⁺.

### The second luminescent material

Any suitable inorganic luminescent material may be used as second luminescent material. The second material is capable of absorbing light in a second wavelength range. The second wavelength may be any wavelength range of interest.

Preferably, the second luminescent material is excitable in the wavelength range between 380 to 580 nm, preferably wherein said second luminescent material is excitable in the UV-A (315 to 400 nm), violet (400 to 440 nm), blue (440 to 480 nm) or green (510 to 560 nm) wavelength range, most preferably in the blue (440 to 480 nm) wavelength range. LEDs based on (Al,In,Ga)N provide efficient "pump" light generation in the violet to blue wavelength range (about 400 nm to about 480 nm). Examples of blue-excitable materials are CaAlSiN₃:Eu²⁺, Y₃Al₅O₁₂:Ce³⁺, CsPbBr₃.

In other aspects of the invention, the second luminescent material is a material having one or more excitation bands between 700 and 1400 nm (IR-A), between 580 and 600 nm (amber and/or orange), between 560 and 580 nm (yellow), between 510-560 nm (green), between 480 and 510 nm (cyan), between 440 and 480 nm (blue), between 400-440 nm (violet), between 315-400 nm (UV-A), and/or between 280-315 nm (UV-B).

Preferably, the host lattice of the second luminescent material is a garnet, fluoride, silicate, phosphate or nitride, more preferably selected from the group consisting of Y₃Al₅O₁₂ ("YAG"), Lu₃Al₅O₁₂ ("LuAG"), MgF₂, CaF₂, Sr₂SiO₄, Ba₂SiO₄, Ca₂MgSi₂O₇, LiSrPO₄, CaAlSiN₃ or a combination thereof. Preferably, said preferred host lattice of the second luminescent material is doped with one or more ions selected from of the group consisting of Eu²⁺, Pb²⁺, Bi³⁺ and Ce³⁺, more preferably Eu²⁺ or Ce³⁺, most preferably Ce³⁺.

Preferably, the host lattice of the second luminescent material or precursor thereof is a garnet, such as Y₃Al₅O₁₂ ("YAG") or Lu₃Al₅O₁₂ ("LuAG") or a combination thereof. Most preferably, the host lattice is selected from the group consisting of Y₃Al₅O₁₂ ("YAG") or Lu₃AbO₁₂ ("LuAG") or a combination thereof and the dopant includes Ce³⁺, optionally in combination with Tb³⁺.

Preferably, in the case of Ce³⁺ doping, the second luminescent material has a host lattice doped at a level of 0.05-5%, more preferably 0.1-4%.

Preferably, the first luminescent material and/or the second luminescent material are in the form of nanoparticles. Suitable nanoparticles include particles of which at least one dimension is at a nanometer scale, preferably ≤ 100 nm. The small size allows smaller distances between the surfaces of the first and second material, which (further) enables inter-particle non-radiative energy transfer to occur.

More preferably said first luminescent material and said second luminescent material are in the form of nanoparticles. Providing both materials in the form of nanoparticles allows more efficient mixing and even distribution of the particles, which further promotes inter-particle non-radiative energy transfer to occur.

As discussed, the D₅₀ value of the smallest dimension of the nanoparticles is preferably ≥ 1 nm and ≤ 100 nm, more preferably ≥ 1nm and ≤50 nm, most preferably ≥ 2nm and ≤10 nm, as measured using transmission electron microscopy (TEM). D₅₀ is defined as the median value of the length of the smallest dimension of the nanoparticles, measured from an ensemble of at least 50 representative particles.

In another preferred embodiment, the second luminescent material is provided as a bulk material with the first luminescent material provided on the second luminescent material. In this context the term "bulk" especially means and/or includes greater than nanoscale, for example greater than 100 nm in diameter and including micro-size scales.

### Salt

Any suitable salt having a melting temperature of above the temperature at which the mixture is heated may be used in the methods according to all aspects of the invention.

Preferably, the salt comprises Se²⁻, S²⁻, Cl⁻, F⁻, Br⁻, I⁻, SO₄²⁻, PO₄³⁻, or NO₃⁻, or a combination thereof as anion and H⁺, Li⁺, Na⁺, K⁺, Be²⁺, Ca²⁺, Al³⁺, Ba²⁺, Mg²⁺, or Sr²⁺, or a combination thereof as cation. More preferably, the salt is K₂SO₄ (Tₘ=1069 °C).

The salt is preferably provided as a crystalline solid.

If desired, the salt may ground or milled before mixing. The smaller particles allow the salt to more evenly mix with the luminescent material.

### (I) preparing a mixture comprising the luminescent material or a precursor thereof and the salt.

The methods according to all aspects of the invention comprise preparing a mixture comprising the luminescent material or a precursor thereof and the salt. Accordingly, the skilled person will appreciate that the characteristics and features described herein are applicable to the first and second aspect of the invention. Thus (preferred) characteristics and features described in relation to "a mixture comprising (i) the first luminescent material or a precursor thereof and (ii) the salt" are applicable to "a mixture comprising (i) a first luminescent material or a precursor thereof and/or a second luminescent material or a precursor thereof and (ii) a salt *mutatis mutandis.*

The mixture comprising the luminescent material or a precursor thereof and the salt can be prepared in any suitable manner.

In a preferred embodiment (hereinafter also referred to as A), preparing the mixture comprises dry mixing (i) the luminescent material or the precursor thereof and (ii) the salt. The skilled person will understand that, in this embodiment, the luminescent material or the precursor thereof and the salt are mixed as dry solids. This embodiment has the advantage that no suspension, dispersion and/or evaporation steps are required. Preferably, the dry mixing comprises grinding or milling a mixture comprising (i) the luminescent material or said precursor thereof and (ii) the salt.

In further preferred embodiment (hereinafter also referred to as B), preparing the mixture comprises mixing (i) said luminescent material or said precursor thereof and (ii) said salt into a liquid to obtain a dispersion. The liquid may then be separated from the dispersion, preferably by evaporation of said liquid. The salt may be added to the liquid before, after or while dispersing the luminescent material in the liquid. Preferably, the salt is added in excess such that it does not completely dissolve.

Any suitable liquid may be chosen in which the luminescent material, preferably the luminescent material in particulate form, most preferably in the form of nanoparticles, may disperse well. Preferably, the liquid has a relatively low boiling point, as this facilitates removal of the liquid later in the process. Preferably, the liquid is water or an alcohol. Preferably, the alcohol is a C₁-C₄ alkanol, for instance methanol, ethanol, or propanol.

Preferably, the mixture is subjected to sonification in an ultrasonic bath or using an ultrasonic probe. This has the advantage that mixing may be enhanced.

In a further preferred embodiment (hereinafter also referred to as C) preparing said mixture comprises preparing an emulsion comprising an disperse phase and a continuous phase, the disperse phase comprising (i) the luminescent material or the precursor thereof and (ii) the salt. The liquids forming the emulsion may then be separated from the emulsion, preferably by sedimentation of the emulsion droplets. Preferably, the disperse phase is an aqueous phase and the continuous phase is a non-polar (or oil) phase. Any suitable non-polar solvent may be used to obtain the non-polar (or oil) phase, for instance a C₅-C₁₂ alkane, preferably cyclohexane.

The emulsion may be prepared in any suitable manner, for instance using sonification. Sedimentation may be effected in any suitable manner, for instance by contacting the emulsion with an alcohol or aceton and/or by gravity separation (e.g. centrifugation).

Preferably, preparing the mixture comprising (i) said luminescent material or said precursor thereof and (ii) said salt comprises (applicable to each of embodiments A, B and C) comminuting the salt, for instance by milling or grinding and/or subjecting (i) the luminescent material or precursor thereof and/or (ii) the salt to ultrasonic treatment, milling and/or grinding. These measures may be performed on the materials before, during or after mixing.

### Salt: luminescent material weight ratio (w/w)

There is no particular upper or lower limit for the weight ratio of the salt:luminescent material. Preferably, the salt:luminescent (w/w) ratio is chosen sufficiently high that (nano)particles of the luminescent material or precursor thereof are separated far enough to prevent sintering at high temperature. As discussed, it is found that increasing the salt:luminescent (w/w) ratio has the advantage of reducing sintering (aggregation, growth and/or clustering). This effect is found to be particularly pronounced in case of embodiments (A) and (B) described hereinabove.

Preferably, the weight ratio of salt to luminescent material and/or precursor thereof in the mixture is more than 1:1 (w/w), preferably more than 2:1 (w/w), more preferably more than 5:1 (w/w), most preferably more than 10:1 (w/w). Preferably, the ratio of salt:luminescent material in the mixture is about 50:1 or higher, about 100:1 or higher, or 200:1 or higher, in particular in case of embodiments (A) or (B) described hereinabove. It is found that a high the salt:luminescent weight ratio leads to both better separation of the luminescent material and better salt matrix characteristics. It has further been found that higher salt:luminescent material ratios allow longer heating of the mixture without sintering of the nanoparticles.

However, extremely high ratios of salt:luminescent material may be impractical, requiring extremely large amounts of salt. Thus, for practical reasons, it the ratio is preferably of about 500:1 or lower, more preferably about 100:1 or lower. In case mixing method (C) is used, the preferred salt:luminescent material ratios may be lower. Preferably 10:1 or lower is used, more preferably 5:1 or lower.

As used herein, all ratios refer to weight ratios. As will be understood by the skilled person and as used herein in expressing the ratio the weight of the luminescent material refers to the total weight of the luminescent material (including the first luminescent material and second luminescent material if both are present, including ligands if present) and the precursor thereof present in the mixture.

### (II) heating the mixture at a temperature of 300°C or more.

The methods according to all aspects of the invention comprise heating the mixture at a temperature of 300°C or more. Accordingly, the skilled person will appreciate that the (preferred) characteristics and features described herein are applicable to the first and second aspect of the invention *mutatis mutandis.*

Heating the luminescent material is found to result in improved crystallinity of the material, comprising fewer defects. In the case of doped crystalline luminescent materials, heating the luminescent material may further promote migration of the doping ion into the host lattice, enhancing emission. Finally, heat treatment can remove any organic surface ligands, or other undesired organic materials present.

It has been found that higher temperatures may give better results. Preferably, the temperature is about 500 °C or higher, more preferably about 800 °C or higher, even more preferably 1000 °C or higher.

There is no particular upper limit for the temperature at which the mixture is heated, and heating may be effected at any suitable temperature below the melting temperature of the salt and below the melting and/or decomposition temperature of the luminescent material. Melting temperatures of salts are known and can be determined by the skilled person. For practical reasons, it may be preferred to use a temperature of about 1500 °C or lower, more preferably 1300 °C or lower. In a preferred embodiment the mixture is heated at a temperature from 900 to 1500 °C, preferably for 1 minute to 20 hours.

When using higher temperatures, a higher ratio of salt:luminescent material may advantageously be used to further limit aggregation of the luminescent material.

Preferably, the mixture heated for at least 1 minute, more preferably 15 minutes to 12 hours. It has been found that when using higher temperatures, shorter times allow good results.

It has further been found that a high ratio of salt:luminescent material allows longer heating times without aggregation of the luminescent material.

Preferably, the mixture is heated in an inert atmosphere (for example N₂ or Ar gas). In other embodiments according to the invention however, oxidative or reductive gases may be required to enable the precursor to form into the luminescent material or bring or keep the active ion in the desired oxidation state.

### Separation of luminescent material

Generally, after heat treatment, the luminescent material is separated from the mixture. Salt may be removed from the mixture in any suitable manner, for instance by contacting the liquid with a solvent which enables the salt to dissolve, preferably water. In a preferred embodiment, the salt is K₂SO₄ and the solvent is water.

### Organic ligand removal

Preferably, organic ligands, if present, are removed from the nanoparticles. It is found that removal of organic ligands facilitates bringing the different types of luminescent materials in close proximity, which is particularly advantageous if it is desired to obtain a composition allowing inter particle energy transfer (FRET) between nanophosphors.

Methods for removing organic ligands from luminescent materials are known in the art and optional removal of organic ligands is not limited to a particular method. For instance, organic ligand removal may be effected by contacting the nanoparticle comprising organic ligands with an acid, for instance HCl. The use of HCl to remove organic ligands is described in Wang et al, Tuning upconversion through Energy Migration in Core-Shell Nanoparticles, Supplementary Information, Nature Materials (2011) 1-35. Another method is described in Nano Lett., 2011, 11 (12), pp 5356-5361. Another method comprises contacting the nanophosphor with an oxidizing agent.

In a preferred embodiment, organic ligands are removed with a heat treatment to prevent damage to the nanoparticles.

Treatment of the luminescent materials by use of the methods according to the invention is generally found to removes organic ligands.

### (c) mixing the first luminescent material or the precursor thereof and the second luminescent material or the precursor thereof

The first luminescent material or the precursor thereof and the second luminescent material or the precursor thereof may be mixed by any method known in the art, such as grinding, milling, stirring, and the like, either in a liquid or using dry materials.

In a preferred embodiment, at least one of the first luminescent material and the second luminescent material is provided as a dispersion in a liquid. The other luminescent material may be added as dry material, or may be provided as a dispersion also. The luminescent material compositions are mixed by stirring, and a liquid comprising a mixed dispersion can be obtained. The liquid may be removed, preferably by evaporating, yielding a dry luminescent composition.

Surprisingly it has been found that heat treated luminescent materials in the form of nanoparticles show desirable characteristics for dispersing into a liquid. Thus, the heat treated luminescent particles may be dispersed into a dispersion of the other luminescent material. Preferably, this dispersion is performed under vigorous stirring and/or sonicating.

In view of the above, preferably stages (I) and (II) are effected prior to mixing the first luminescent material and second luminescent material in stage (c).

Mixing in (c) preferably results in a mixture comprising the first luminescent material and the second luminescent material. Preferably, said first luminescent material and said second luminescent material are so arranged to each other to allow non-radiative energy transfer from said second luminescent material to said first luminescent material. Generally, this comprises close proximity between the first and second luminescent materials, for instance from about 0.5 nm to about 10 nm in distance. The skilled person is well aware how non-radiative energy transfer may be achieved. This is, for instance, be described in WO2018/167266, the contents of which are herewith incorporated by reference.

### Luminescent materials, compositions, light-emitting device and lighting system.

The invention further relates to a luminescent composition obtainable by the method of the invention.

The invention further relates to a luminescent material obtainable by the method of the invention.

The luminescent composition and/or luminescent material obtained by the method of the invention may be used in a light-emitting device. Preferably, said light-emitting device further comprises an excitation source for the luminescent material, such as for the second luminescent material.

A light-emitting device comprising the luminescent composition and/or luminescent material of the invention may be used in a lighting system.

In a preferred embodiment, the lighting system is selected from the group consisting of a lamp or luminaire, office lighting systems, household application systems shop lighting systems, home lighting systems, accent lighting systems, spot lighting systems, theater lighting systems, fiber-optics application systems, projection systems, self-lit display systems, pixelated display systems, segmented display systems, warning sign systems, medical lighting application systems, indicator sign systems, and decorative lighting systems, portable systems, automotive applications, micro-LED based systems and green house lighting systems.

The invention will now be further illustrated referring to the below examples, without however being limited thereto.

### EXAMPLES

### Comparative experiment A: Annealing without salt

The following procedure was performed:
- YAG:Ce nanoparticles were synthesized via a glyco-thermal method (J. Mater. Chem. C, 2017, 5,12561).
- The YAG:Ce particles were dried.
- The YAG:Ce particles were heated in an oven to 1250 °C for 30 seconds.
Analysis with TEM showed that undesired sintering occurred.

### Example 1

The following exemplary procedure was performed:
- YAG:Ce nanoparticles were synthesized via a glyco-thermal method (J. Mater. Chem. C, 2017,5,12561).
- A 0.25 wt% dispersion of YAG:Ce nanoparticles in ethanol was made.
- Pre-grinded K₂SO₄ was added in a weight ratio of 1:400 YAG:K₂SO₄.
- The dispersion was mixed using an ultrasonic probe, while the ethanol is allowed to evaporate.
- The mixture was dried.
- The mixture was heated in an oven to 1050 °C for 5 minutes.
- The mixture was washed with water to remove the K₂SO₄.
Analysis with TEM showed that sintering was minimized.

### Example 2

The following exemplary procedure was performed:
- YAG:Ce nanoparticles were synthesized via a glyco-thermal method (J. Mater. Chem. C, 2017,5,12561).
- A 0.5M K₂SO₄ solution in water was prepared.
- YAG:Ce is mixed with K₂SO₄ solution to obtain a 0.00004 wt% dispersion, resulting in a 1:2200 YAG:salt weight ratio. The mixing was enhanced by sonification in an ultrasonic bath for 30 minutes.
- Igepal CO-520 was added in a 1:2 Igepal:K₂SO₄ solution volume ratio
- Cyclohexane was added in a 1.5:1 cyclohexane:K₂SO₄ solution volume ratio
- The mixture was mixed by putting it in an ultrasonic bath for 30 minutes.
- Acetone was added in a 1:15 acetone:mixture volume ratio.
- The mixture was centrifuged and the sediment is dried.
- The obtained dried powder was heated in an oven to 1050 °C for 5 minutes.
- The powder was washed with water to remove the K₂SO₄.
Analysis with TEM showed that sintering was minimized.

### Example 3:

The following exemplary procedure was performed:
- YAG:Ce precursors were synthesized via a urea precipitation method (Electronic materials, 2018, 53,15196).
- A 0.5M K₂SO₄ solution in water was prepared
- YAG:Ce was mixed with K₂SO₄ solution to obtain a 1:15 YAG:K₂SO₄ wt ratio dispersion. The mixing was enhanced by sonification in an ultrasonic bath for 30 minutes.
- Igepal CO-520 was added in a 1:4 Igepal:K₂SO₄ solution volume ratio.
- Cyclohexane was added in a 2.5:1 cyclohexane:K₂SO₄ solution volume ratio.
- The mixture was mixed by putting it in an ultrasonic bath for 30 minutes.
- Acetone was added in a 1:8 acetone:reaction mixture volume ratio.
- The mixture was centrifuged, washed with acetone, and the sediment is dried.
- The obtained dried powder was heated in an oven to 1020 °C for 2 hours.
- The powder was washed to remove the K₂SO₄.
- The luminescence was measured of the YAG:Ce precursors before salt treatment and the YAG:Ce nanoparticles after heating and removing the K₂SO₄.

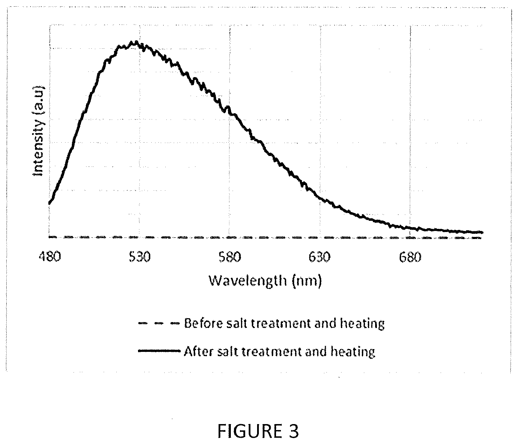

The emission spectra are shown in Figure 3. Figure 3 shows that mixing in a 1:15 YAG:salt weight ratio followed by the temperature treatment greatly enhances the luminescence intensity compared to that of a sample which has not been heat treated. Analysis with TEM showed that sintering was minimized. Thus, the presence of the salt enables increasing the peak intensity without resulting in sintering of the particles.

## Claims

**1.** A method for preparing a luminescent composition, said method comprising:
(a) providing a first luminescent material or a precursor thereof, said first luminescent material being capable of emitting light in a first wavelength range;
(b) providing a second luminescent material or a precursor thereof, said second luminescent material being capable of absorbing light in a second wavelength range and having an emission spectrum which overlaps at least partly with one or more of excitation bands of said first luminescent material; and
(c) mixing said first luminescent material or said precursor thereof and said second luminescent material or said precursor thereof,
wherein said method further comprises:
(I) preparing a mixture comprising (i) said first luminescent material or said precursor thereof and/or said second luminescent material or said precursor thereof and (ii) a salt; and
(II) heating said mixture at a temperature of 300°C or more.

**2.** The method according to claim 1, wherein said method comprises heating said second luminescent material or said precursor thereof at temperature of at least 300 °C in the presence of a salt.

**3.** The method according to claim 1 or 2, wherein said heating is performed prior to said mixing in (c).

**4.** The method according to any preceding claim, wherein said first luminescent material or said precursor thereof and/or said second luminescent material or said precursor thereof are in the form of nanoparticles, preferably wherein said first luminescent material or said precursor thereof and said second luminescent material or said precursor thereof are in the form of nanoparticles, preferably wherein the D₅₀ value of the nanoparticles is ≥ 1 nm and ≤ 100 nm.

**5.** The method according to any preceding claim, wherein said first luminescent material or said precursor thereof is doped with one or more ions selected from the group consisting of Eu³⁺, Tb³⁺, and Mn⁴⁺.

**6.** The method according to any preceding claim, wherein said first luminescent material is a red emitting material.

**7.** The method according to any preceding claim, wherein said second luminescent material is excitable in the wavelength range between 380 to 580 nm, preferably wherein said second luminescent material is excitable in the high UV-A (380 to 400 nm), violet (400 to 440 nm), blue (440 to 480 nm) or green (510 to 560 nm) wavelength range, preferably in the blue (440 to 480 nm) wavelength range.

**8.** The method according to any preceding claim, wherein said second luminescent material or said precursor thereof is doped with one or more ions selected from the group consisting of Eu²⁺, Pb²⁺, Bi³⁺ and Ce³⁺, preferably Ce³⁺.

**9.** The method according to any preceding claim, wherein said second luminescent material or said precursor thereof has a host lattice which is Y₃Al₅O₁₂ ("YAG") or Lu₃Al₅O₁₂ ("LuAG") or a combination thereof, preferably wherein said second luminescent material or said precursor thereof is doped with Ce³⁺.

**10.** The method according to any preceding claim, wherein the mixture comprising (i) said first luminescent material or said precursor thereof and/or said second luminescent material or said precursor thereof and (ii) said salt is obtained or obtainable by a method comprising
(A) dry mixing (i) said first luminescent material or said precursor thereof and/or said second luminescent material or said precursor thereof and (ii) said salt; or
(B) mixing (i) said first luminescent material or said precursor thereof and/or said second luminescent material or said precursor thereof and (ii) said salt into a liquid to obtain a dispersion; and, preferably, separating said liquid from said dispersion; or
(C) preparing an emulsion comprising an disperse phase and a continuous phase, said disperse phase comprising (i) said first luminescent material or said precursor thereof and/or said second luminescent material or said precursor thereof and (ii) said salt, and preferably, demulsifying said emulsion and separating liquid from said demulsified emulsion.

**10.** The method according to any preceding claim, wherein the ratio of salt to luminescent material in said mixture is more than 1:1 (w/w), preferably more than 2:1 (w/w), more preferably more than 5:1 (w/w), most preferably more than 10:1 (w/w).

**11.** A method for treating or obtaining a luminescent material, said method comprising:
(I) preparing a mixture comprising (i) a luminescent material and/or a precursor thereof and (ii) a salt, and
(II) heating the mixture at a temperature of 300°C or more,
wherein the ratio of salt to luminescent material and/or precursor thereof in the mixture is more than 1:1 (w/w), preferably more than 2:1 (w/w), more preferably more than 5:1 (w/w), most preferably more than 10:1 (w/w).

**12.** The method according to any of the preceding claims, wherein the salt comprises Se²⁻, S²⁻, Cl⁻, F⁻, Br⁻, I⁻, SO₄²⁻, PO₄³⁻, or NO₃⁻, or a combination thereof as anion and H⁺, Li⁺, Na⁺, Al³⁺, Ba²⁺, K⁺, Be²⁺, Ca²⁺, Mg²⁺, or Sr²⁺, or a combination thereof as cation.

**13.** The method according to any of the preceding claims, wherein the salt is K₂SO₄, and the, for instance second, luminescent material has a host lattice which is YAG or LuAG, or a combination thereof.

**14.** The method according to any one of claims 11 to 13, wherein said preparing said mixture comprises dry mixing (i) said luminescent material or said precursor thereof and (ii) said salt, preferably wherein said dry mixing comprises grinding or milling a mixture comprising (i) said luminescent material or said precursor thereof and (ii) said salt.

**15.** The method according to any one of claims 11 to 13, wherein said preparing said mixture comprises mixing (i) said luminescent material or said precursor thereof and (ii) said salt into a liquid to obtain a dispersion; and, preferably, separating said liquid from said dispersion, preferably by evaporation of said liquid.

**16.** The method according to claim 15, wherein said salt is added to the liquid before, after or while dispersing the luminescent material in the liquid.

**17.** The method according to claim 15 or 16, wherein said liquid is water or an alcohol, preferably wherein said alcohol is a C₁-C₄ alkanol, preferably methanol, ethanol, or propanol.

**18.** The method according to any one of claims 15 to 17, wherein said mixture is subjected to sonification.

**19.** The method according to any one of claims 11 to 13, wherein said preparing said mixture comprises preparing an emulsion comprising an disperse phase and a continuous phase, said disperse phase comprising (i) said luminescent material or said precursor thereof and (ii) said salt, and preferably, separating the emulsion droplets from the emulsion by sedimentation, preferably wherein said disperse phase is an aqueous phase and said continuous phase is an non-polar (or oil) phase.

**20.** The method according to claim 19, wherein said method comprises preparing said emulsion by sonification.

**21.** The method according to any preceding claim, wherein the method further comprises comminuting the salt, for instance by milling or grinding.

**22.** The method according to any preceding claim, wherein the mixture comprising (i) said luminescent material or said precursor thereof and (ii) said salt is subjected to ultrasonic, milling and/or grinding.

**23.** The method according to any preceding claim, wherein the luminescent material comprises organic ligands, and wherein said ligands are selected such as to enhance mixing with the salt.

**24.** The method according to any preceding claim, wherein said heating comprises heating said mixture at a temperature of 900 to 1500 °C, preferably for 1 minute to 20 h.

**25.** The method according to any preceding claims, wherein the method comprises, after said heating, removing said salt from (from the mixture) by contacting the liquid with a solvent, for instance water.

**26.** The method according to any preceding claim, wherein organic ligands are removed from the luminescent material.

**27.** The method according to any preceding claim, wherein said luminescent material or precursor thereof (e.g. said first luminescent material or said precursor thereof and/or said second luminescent material or said precursor thereof) is crystalline prior to said heating.

**28.** The method according to any preceding claim, wherein said luminescent material or precursor is not-crystalline and/or may not contain all elements of the final product material prior to said heating.

**29.** Luminescent composition obtainable by the method according to any preceding claim.

**30.** Luminescent material obtainable by the method according to any preceding claim.

**31.** Light-emitting device, said light emitting device comprising the luminescent composition of claim 29 and/or the luminescent material of claim 30, preferably wherein said light-emitting device further comprises an excitation source for the luminescent material, such as for the second luminescent material.

**32.** A lighting system comprising a light emitting device according to claim 31, preferably, wherein the lighting system is selected from the group consisting of a lamp or luminaire, office lighting systems, household application systems shop lighting systems, home lighting systems, accent lighting systems, spot lighting systems, theater lighting systems, fiber-optics application systems, projection systems, self-lit display systems, pixelated display systems, segmented display systems, warning sign systems, medical lighting application systems, indicator sign systems, and decorative lighting systems, portable systems, automotive applications, micro-LED based systems and green house lighting systems.
